# EUROPEAN PATENT SPECIFICATION

(11) **EP 3 958 633 B1**
(45) Date of publication and mention of the grant of the patent: **20.03.2024**
(21) Application number: 20819420.9
(22) Date of filing: 04.06.2020
(51) Int. Cl.: H04W 72/04, H04L 1/1829, H04L 5/00

(54) **METHOD FOR FEEDBACK INSTRUCTION, AND COMMUNICATION DEVICE**
VERFAHREN ZUR RÜCKKOPPLUNGSANWEISUNG UND KOMMUNIKATIONSGERÄT
PROCÉDÉ D'INSTRUCTION DE RÉTROACTION, ET DISPOSITIF DE COMMUNICATION

(30) Priority: 04.06.2019 CN 201910482602
(43) Date of publication of application: 23.02.2022
(73) Proprietor: Huawei Technologies Co., Ltd., Shenzhen, Guangdong 518129 (CN)
(72) Inventor: HUANG, Haining, Shenzhen, Guangdong 518129 (CN); WANG, Junwei, Shenzhen, Guangdong 518129 (CN); ZHANG, Xingwei, Shenzhen, Guangdong 518129 (CN); LI, Chao, Shenzhen, Guangdong 518129 (CN); WEN, Ronghui, Shenzhen, Guangdong 518129 (CN)
(74) Representative: Körber, Martin Hans
(86) International application number: PCT/CN2020/094453
(87) International publication number: WO 2020/244599

(56) References cited:
- WO-A1-2017/167305
- CN-A- 106 612 557
- CN-A- 109 155 726
- QUALCOMM INCORPORATED: "Enhancements to Scheduling and HARQ operation for NR-U", 3GPP DRAFT; R1-1813415 7.2.2.4.3 ENHANCEMENTS TO SCHEDULING AND HARQ OPERATION FOR NR-U, 3RD GENERATION PARTNERSHIP PROJECT (3GPP), MOBILE COMPETENCE CENTRE ; 650, ROUTE DES LUCIOLES ; F-06921 SOPHIA- , vol. RAN WG1, no. Spokane, USA; 20181112 - 20181116 3 November 2018 (2018-11-03), XP051479737, Retrieved from the Internet: URL:http://www.3gpp.org/ftp/tsg%5Fran/WG1% 5FRL1/TSGR1%5F95/Docs/R1%2D1813415%2Ezip [retrieved on 2018-11-03]
- HUAWEI ET AL: "Feature lead summary of HARQ enhancement in NR-U", 3GPP DRAFT; R1-1811883 FEATURE LEAD SUMMARY OF HARQ ENHANCEMENT IN NR-U-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Chengdu, China; 20181008 - 20181012 10 October 2018 (2018-10-10), XP051519206, Retrieved from the Internet: URL:http://www.3gpp.org/ftp/tsg%5Fran/WG1% 5FRL1/TSGR1%5F94b/Docs/R1%2D1811883%2Ezip [retrieved on 2018-10-10]
- SAMSUNG: "On Sidelink Feedback Channel Format", R1-1906947, 3 May 2019 (2019-05-03), XP051728397, DOI: 20200713151511A

## Description

(excised)

### TECHNICAL FIELD

Embodiments of this application relate to the communications field, and in particular, to a communications method and a communications apparatus.

### BACKGROUND

In a wireless communications system, a hybrid automatic repeat request (hybrid automatic repeat request, HARQ) technology is usually used between a receiving party and a transmitting party to improve data transmission reliability. Specifically, a transmitting node sends a transport block (transport block, TB) to a receiving node. If the receiving node successfully receives the TB, the receiving node feeds back a positive acknowledgement (acknowledgement, ACK) to the transmitting node. Alternatively, if the receiving node fails to receive the TB, the receiving node feeds back a negative acknowledgement (negative acknowledgement, NACK) to the transmitting node. After receiving the NACK from the receiving node, the transmitting node may further retransmit the TB to the receiving node.

In a possible implementation, the transmitting node may indicate, to the receiving node by using control signaling, a resource for feeding back the ACK or the NACK. When the transmitting node does not indicate the resource for feeding back the ACK or the NACK, the transmitting party and the receiving party have inconsistent understanding on HARQ retransmission behavior, which may cause confusion in data transmission.

QUALCOMM INCORPORATED: "Enhancements to Scheduling and HARQ-operation for NR-U", 3GPP DRAFT; TSG RAN WG1 Meeting #95, R1-1813415, Spokane, USA, November 12-16, 2018 discusses various aspects of HARQ operation.

### SUMMARY

Embodiments of this application provide a feedback indication method and a communications apparatus, to unify behavior of a transmitting party and a receiving party. This ensures data transmission performance as far as possible. The invention is defined in the independent claims. Advantageous features are defined in the dependent claims.

To achieve the foregoing objective, the following technical solutions are used in the embodiments of this application.

According to a first aspect, a feedback indication method is disclosed, including: determining, by a transmitting node, a first message, where a first field in the first message is set to be null, and the first field is used to indicate a time-frequency resource that carries hybrid automatic repeat request HARQ information, or indicate information related to the time-frequency resource that carries the HARQ information; and sending, by the transmitting node, the first message to a receiving node, and the first message is used to indicate the receiving node to delay feeding back HARQ information corresponding to a first transport block TB, or the first message is used to indicate the receiving node to give up feeding back the HARQ information corresponding to the first TB; and the first TB is a transport block scheduled by the first message.

In the method provided in this embodiment of this application, when the first field in the first message is set to be null, both the transmitting node and the receiving node consider by default that feedback of the HARQ information corresponding to the TB scheduled by the first message is given up. Alternatively, when the first field in the first message is set to be null, both the transmitting node and the receiving node consider by default that feedback of the HARQ information corresponding to the TB scheduled by the first message is delayed. Behavior of the transmitting party and the receiving party is unified by using the first message, to avoid confusion between the behavior of the transmitting party and the receiving party. The transmitting node may retransmit the TB when considering by default that feedback of the HARQ information is given up. This ensures data transmission reliability. Alternatively, when considering by default that feedback of the HARQ information is delayed, the transmitting node may wait for the HARQ information subsequently sent by the receiving node, instead of retransmitting the TB. This prevents the receiving node from confusing retransmitted data and newly transmitted data, thereby improving data transmission reliability.

With reference to the first aspect, in a first possible implementation of the first aspect, that the first message is used to indicate the receiving node to delay feeding back HARQ information corresponding to a first TB, or the first message is used to indicate the receiving node to give up feeding back the HARQ information corresponding to the first TB includes: the first message includes a second field, where when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

In this embodiment of this application, the second field may be further newly added to the first message to specifically indicate behavior of UE. For example, when the second field is "0", the first message indicates a terminal to give up feeding back corresponding HARQ information; or when the second field is " 1", the first message indicates a terminal to delay feeding back corresponding HARQ information.

With reference to the first aspect or the first possible implementation of the first aspect, in a second possible implementation of the first aspect, the first message includes a third field, the third field is used to indicate to delay feeding back N pieces of HARQ information, the N pieces of HARQ information include the HARQ information corresponding to the first TB, and N is an integer greater than or equal to two.

In this embodiment of this application, the third field may be further newly added to the first message to specifically indicate a quantity of pieces of accumulated HARQ information whose feedback needs to be delayed. For example, when the second field is "00", the first message indicates a terminal to delay feeding back one corresponding piece of HARQ information; or when the second field is "01", the first message indicates a terminal to delay feeding back two pieces of HARQ information. By analogy, when one piece of HARQ information whose feedback needs to be delayed is added, the third field increases by one.

With reference to the first aspect or the first or the second possible implementation of the first aspect, in a third possible implementation of the first aspect, the method further includes: sending, by the transmitting node, a second message to the receiving node, where the second message includes a fourth field; the fourth field is used to indicate a feedback resource, and the feedback resource is used to carry the HARQ information corresponding to the first TB and HARQ information corresponding to a second TB; and the second TB is a transport block scheduled by the second message.

In this embodiment of this application, the transmitting node may indicate a terminal to carry HARQ information whose feedback is delayed when the terminal feeds back HARQ information next time. When allocating a time-frequency resource to HARQ information corresponding to a transport block scheduled next time, the transmitting node needs to consider the HARQ information whose feedback is delayed. The allocated feedback resource can carry the HARQ information whose feedback is delayed and the HARQ information corresponding to the transport block scheduled next time.

With reference to any one of the first aspect or the first to the third possible implementations of the first aspect, the method further includes: determining, by the transmitting node based on one or more of a congestion control status of a feedback resource, a QoS requirement, a priority of the first TB, or a feedback feature of the first TB, to set the first field to be null, where the feedback feature of the first TB includes that the first TB is fed back based on a transport block granularity or that the first TB is fed back based on a code block group CBG granularity.

In this embodiment of this application, the transmitting node may determine, based on one or more of the congestion control status, the QoS requirement, the priority of the first TB, or the feedback feature of the first TB, whether feedback of the HARQ information corresponding to the first TB needs to be delayed or the HARQ information corresponding to the first TB is not fed back.

According to a second aspect, a communications apparatus is disclosed. The communications apparatus may be a transmitting node or a chip in the transmitting node and includes: a processing unit, configured to determine a first message, where a first field in the first message is set to be null, and the first field is used to indicate a time-frequency resource that carries hybrid automatic repeat request HARQ information or information related to the time-frequency resource that carries the HARQ information; and
a communications unit, configured to send the first message to a receiving node, where the first message is used to indicate the receiving node to delay feeding back HARQ information corresponding to a first transport block TB, or the first message is used to indicate the receiving node to give up feeding back the HARQ information corresponding to the first TB; and the first TB is a transport block scheduled by the first message.

With reference to the second aspect, in a first possible implementation of the second aspect, that the first message is used to indicate the receiving node to delay feeding back HARQ information corresponding to a first TB, or the first message is used to indicate the receiving node to give up feeding back the HARQ information corresponding to the first TB includes: the first message includes a second field, where when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

With reference to the second aspect or the first possible implementation of the second aspect, in a second possible implementation of the second aspect, the first message includes a third field, the third field is used to indicate to delay feeding back N pieces of HARQ information, the N pieces of HARQ information include the HARQ information corresponding to the first TB, and N is an integer greater than or equal to two.

With reference to the second aspect or the first or the second possible implementation of the second aspect, in a third possible implementation of the second aspect, the communications unit is further configured to send a second message to the receiving node, where the second message includes a fourth field; the fourth field is used to indicate a feedback resource, and the feedback resource is used to carry the HARQ information corresponding to the first TB and HARQ information corresponding to a second TB; and the second TB is a transport block scheduled by the second message.

With reference to any one of the second aspect or the first to the third possible implementations of the second aspect, in a fourth possible implementation of the second aspect, the processing unit is specifically configured to determine, based on one or more of a congestion control status of a feedback resource, a QoS requirement, a priority of the first TB, or a feedback feature of the first TB, to set the first field to be null, where the feedback feature of the first TB includes that the first TB is fed back based on a transport block granularity or that the first TB is fed back based on a code block group CBG granularity.

According to a third aspect, a feedback indication method is disclosed and includes:
receiving, by a receiving node, a first message from a transmitting node, where a first field in the first message is set to be null, and the first field is used to indicate a time-frequency resource that carries hybrid automatic repeat request HARQ information or information related to the time-frequency resource that carries the HARQ information; and the first message is used to indicate the receiving node to delay feeding back HARQ information corresponding to a first TB, or the first message is used to indicate the receiving node to give up feeding back the HARQ information corresponding to the first TB; and the first TB is a transport block scheduled by the first message; and delaying, by the receiving node based on the first message, feeding back the HARQ information corresponding to the first TB; or giving up, based on the first message, feeding back the HARQ information corresponding to the first TB.

With reference to the third aspect, in a first possible implementation of the third aspect, that the first message is used to indicate the receiving node to delay feeding back HARQ information corresponding to a first TB, or the first message is used to indicate the receiving node to give up feeding back the HARQ information corresponding to the first TB includes: the first message includes a second field, where when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

With reference to the third aspect or the first possible implementation of the third aspect, in a second possible implementation of the third aspect, the first message includes a third field, the third field is used to indicate to delay feeding back N pieces of HARQ information, the N pieces of HARQ information include the HARQ information corresponding to the first TB, and N is an integer greater than or equal to two.

With reference to the third aspect or the first or the second possible implementation of the third aspect, in a third possible implementation of the third aspect, the method further includes: receiving a second message from the transmitting node, where the second message includes a fourth field; the fourth field is used to indicate a feedback resource, and the feedback resource is used to carry the HARQ information corresponding to the first TB and HARQ information corresponding to a second TB; and the second TB is a transport block scheduled by the second message.

According to a fourth aspect, a communications apparatus is disclosed, and the communications apparatus may be a receiving node or a chip in the receiving node. The apparatus includes: a communications unit, configured to receive a first message from a transmitting node, where a first field in the first message is set to be null, and the first field is used to indicate a time-frequency resource that carries hybrid automatic repeat request HARQ information or information related to the time-frequency resource that carries the HARQ information; and the first message is used to indicate the receiving node to delay feeding back HARQ information corresponding to a first TB, or the first message is used to indicate the receiving node to give up feeding back the HARQ information corresponding to the first TB; and the first TB is a transport block scheduled by the first message. The communications unit is further configured to: delay, based on the first message, feeding back the HARQ information corresponding to the first TB; or give up, based on the first message, feeding back the HARQ information corresponding to the first TB.

With reference to the fourth aspect, in a first possible implementation of the fourth aspect, that the first message is used to indicate the receiving node to delay feeding back HARQ information corresponding to a first TB, or the first message is used to indicate the receiving node to give up feeding back the HARQ information corresponding to the first TB includes: the first message includes a second field, where when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

With reference to the fourth aspect or the first possible implementation of the fourth aspect, in a second possible implementation of the fourth aspect, the first message includes a third field, the third field is used to indicate to delay feeding back N pieces of HARQ information, the N pieces of HARQ information include the HARQ information corresponding to the first TB, and N is an integer greater than or equal to two.

With reference to the fourth aspect or the first or the second possible implementation of the fourth aspect, in a third possible implementation of the fourth aspect, the communications unit is further configured to receive a second message from the transmitting node, where the second message includes a fourth field; the fourth field is used to indicate a feedback resource, and the feedback resource is used to carry the HARQ information corresponding to the first TB and HARQ information corresponding to a second TB; and the second TB is a transport block scheduled by the second message.

According to a fifth aspect, a computer-readable storage medium is disclosed. The computer-readable storage medium stores instructions. When the computer-readable storage medium is run on the communications apparatus according to any one of the second aspect and the implementations of the second aspect, the communications apparatus is enabled to perform the method according to any one of the first aspect and the implementations of the first aspect.

According to a sixth aspect, a computer-readable storage medium is disclosed. The computer-readable storage medium stores instructions. When the computer-readable storage medium is run on the communications apparatus according to any one of the fourth aspect and the implementations of the fourth aspect, the communications apparatus is enabled to perform the method according to any one of the third aspect and the implementations of the third aspect.

According to a seventh aspect, a wireless communications apparatus is disclosed. The wireless communications apparatus stores instructions, and when the wireless communications apparatus runs on the network device according to any one of the fourth aspect and the implementations of the fourth aspect or any one of the second aspect and the implementations of the second aspect, the network device is enabled to perform the method according to any one of the first aspect and the implementations of the first aspect or any one of the third aspect and the implementations of the third aspect. The wireless communications apparatus is a chip.

According to an eighth aspect, a communications apparatus is disclosed, including a processor, where the processor is coupled to a memory. The memory is configured to store a computer program. The processor is configured to execute the computer program stored in the memory, to enable the apparatus to perform the method according to any one of the first aspect and the implementations of the first aspect, and according to any one of the third aspect and the implementations of the third aspect.

According to a ninth aspect, an embodiment of this application provides a chip. The chip includes a processor and an interface circuit, and the interface circuit is coupled to the processor. The processor is configured to run a computer program or instructions, to implement the communications method according to any one of the first aspect and the implementations of the first aspect, and according to any one of the third aspect and the implementations of the third aspect. The interface circuit is configured to communicate with another module other than the chip.

### BRIEF DESCRIPTION OF DRAWINGS

FIG. 1 is a diagram of an architecture of a communications system according to an embodiment of this application;
FIG. 2 is a schematic diagram of resource configuration according to an embodiment of this application;
FIG. 3 is a block diagram of a structure of a communications apparatus according to an embodiment of this application;
FIG. 4 is a schematic flowchart of a feedback indication method according to an embodiment of this application;
FIG. 5 is another schematic flowchart of a feedback indication method according to an embodiment of
FIG. 6 is a schematic flowchart of a feedback indication method according to an embodiment of this application;
FIG. 7 is another block diagram of a structure of a communications apparatus according to an embodiment of this application; and
FIG. 8 is another block diagram of a structure of a communications apparatus according to an embodiment of this application.

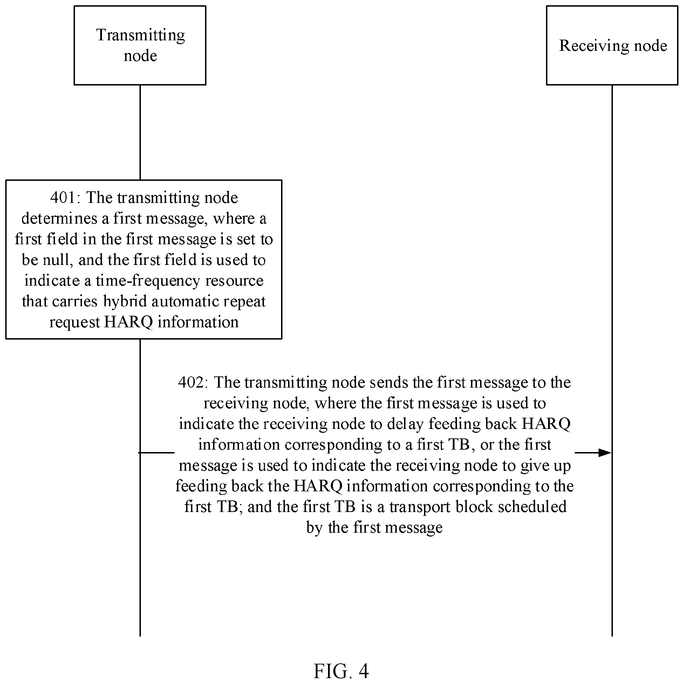

Figure 4 is the most pertinent figure describing the embodiment of the invention, together with the paragraphs of the description related to it.

### DESCRIPTION OF EMBODIMENTS

The following describes the technical solutions of this application with reference to the accompanying drawings.

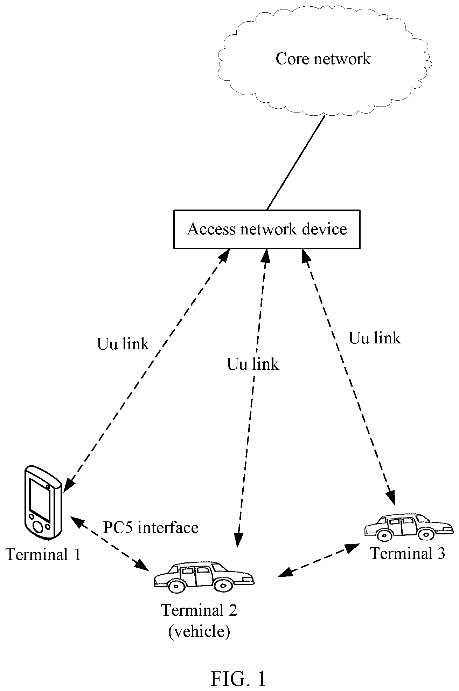

A method provided in the embodiments of this application may be applied to a communications apparatus shown in FIG. 1. The communications system may be a 3rd generation partnership project (3rd generation partnership project, 3GPP) communications system, for example, a long term evolution (long term evolution, LTE) system, or may be a 5th generation (5th generation, 5G) mobile communications system or a new radio (new radio, NR) system, or may be a non-3 GPP communications system. This is not limited in the embodiments of this application.

Refer FIG. 1. The communications system may include a plurality of terminals, an access network device, a core network, and the like. Sidelink communication may be performed between the terminals through a PC5 interface, and a communications link between the terminals is referred to as a sidelink (sidelink, SL). The access network device and the terminal may communicate with each other through a Uu link.

The terminal may be user equipment (user equipment, UE), an access terminal, a UE unit, UE station, a mobile station, a remote station, a remote terminal, a mobile device, a UE terminal, a wireless communications device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communications function, a computing device, another processing device connected to a wireless modem, a vehicle-mounted device, a wearable device, a terminal in a 5G network, a terminal in a future evolved public land mobile network (public land mobile network, PLMN) network, or the like. The terminal in the embodiments of this application may include but is not limited to a vehicle-mounted terminal, a mobile phone (mobile phone), a tablet computer, a computer having a wireless transceiver function, a smart gas station, a smart signal light, and the like.

The access network device may be a transmission reception point (transmission reception point, TRP), a base station, a relay station, a node, an access point, or the like. The access network device may be an access network device in a 5G communications system or an access network device in a future evolved network, or may be a wearable device, a vehicle-mounted device, or the like. In addition, the network device may alternatively be a base transceiver station (base transceiver station, BTS) in a global system for mobile communications (global system for mobile communications, GSM) or code division multiple access (code division multiple access, CDMA) network, an NB (NodeB) in a wideband code division multiple access (wideband code division multiple access, WCDMA) network, or an eNB or eNodeB (evolutional NodeB) in a long term evolution (long term evolution, LTE) network. The access network device 100 may alternatively be a radio controller in a cloud radio access network (cloud radio access network, CRAN) scenario. The following uses a base station as an example for description in this application.

It should be noted that the network architecture shown in FIG. 1 is merely an example of a diagram of an architecture, but a quantity of network elements included in the communications system shown in FIG. 1 is not limited. In addition to the network functional entities shown in FIG. 1, the network shown in FIG. 1 may further include another functional entity, although the another functional entity is not shown in FIG. 1. In addition, names of network elements and names of interfaces between the network elements in the network architecture shown in FIG. 1 are merely examples. In a specific implementation, the names of the network elements and the names of the interfaces between the network elements may be other names. This is not specifically limited in the embodiments of this application. In addition, the method provided in the embodiments of this application may be applied to the communications system shown in FIG. 1, and is also applicable to another HARQ technology network or system. This is not limited in the embodiments of this application.

The embodiments of this application are applicable to transmission between terminals. For example, both a receiving node and a transmitting node in the embodiments of this application are terminals. The embodiments of this application are also applicable to a communications system that supports an unlicensed spectrum, that is, the embodiments of this application are further applicable to transmission between an access network device and a terminal. For example, in the embodiments of this application, the transmitting node is an access network device, and the receiving node is a terminal; or the transmitting node is a terminal, and the receiving node is an access network device.

For ease of understanding, terms in the embodiments of this application are explained and described.

### (1) HARQ

HARQ means that the receiving node needs to feed back 1-bit HARQ information to the transmitting node, to indicate whether a TB sent by the transmitting node is successfully received by the receiving node. In addition, if the transmitting node determines that the receiving node fails to receive the TB, the transmitting node may retransmit the TB to the receiving node.

For example, the transmitting node sends a TB to the receiving node. If the receiving node successfully receives the TB, the receiving node feeds back a 1-bit ACK to the transmitting node, to indicate that the receiving node successfully receives the TB. Alternatively, if the receiving node fails to receive the TB, the receiving node feeds back a 1-bit NACK to the transmitting node, to indicate that the receiving node successfully receives the TB. After receiving the NACK from the receiving node, the transmitting node may further retransmit the TB to the receiving node.

It should be noted that in the embodiments of this application, the 1-bit NACK or the 1-bit ACK may be referred to as HARQ information. For example, the ACK is "1", and the NACK is "0".

(2) Physical sidelink feedback channel (physical sidelink feedback channel, PSFCH), physical sidelink control channel (physical sidelink control channel, PSCCH), and physical sidelink shared channel (physical sidelink shared channel, PSSCH)

The PSCCH is a control channel for sidelink communication between terminals. For example, the terminals may send control signaling to each other by using the PSCCH to schedule data.

The PSSCH is a data channel for sidelink communication between terminals. For example, the terminals may send data to each other by using the PSSCH.

The PSFCH is a channel for feeding back HARQ information between terminals. For example, the terminal may send a 1bit NACK or a 1bit ACK by using the PSFCH.

### (3) PSFCH timeslot

In the embodiments of this application, the PSFCH timeslot is a timeslot in which a terminal can send the PSFCH.

In a possible implementation, there is an implicit association between the PSFCH timeslot and the PSCCH/PSSCH. For example, a fixed time interval K is used between the PSSCH and the PSFCH. For example, if the terminal sends the PSSCH in a timeslot X, the terminal may send the PSFCH in a timeslot X+K or a first timeslot that is after the timeslot X+K and in which a PSFCH feedback resource exists. For example, it is assumed that the time interval between the PSCCH and the PSFCH is two, and it is assumed that the PSSCH is sent in the timeslot X. In this case, the terminal may send the PSFCH in a first timeslot that is in timeslots X+2, X+3 ...and in which the PSFCH feedback resource exists, but cannot send the PSFCH in timeslots X and X+1 even if the PSFCH feedback resource exists in the timeslots X and X + I.

### (4) PSFCH resource

In the embodiments of this application, the PSFCH resource is a time-frequency resource used by a terminal to send the PSFCH. The PSFCH resource is periodically configured. When the time interval K is fixed, there may be no available SL resource in the PSFCH timeslot, or there may be an available SL resource in the PSFCH timeslot, but no available PSFCH resource is obtained.

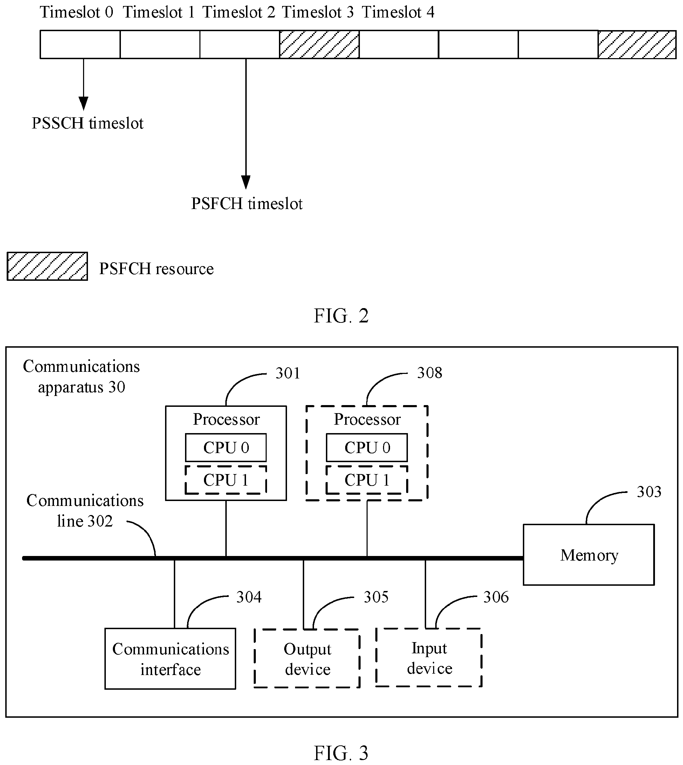

For example, refer to FIG. 2. It is assumed that one PSFCH resource is configured for every four timeslots, and the time interval K is equal to two. The terminal sends the PSSCH in a timeslot 1, and a timeslot 3 is the PSFCH timeslot. However, there is no available PSFCH resource in the timeslot 3.

The transmitting node and the receiving node in the embodiments of the present invention may be implemented by using a communications apparatus 30 in FIG. 3. FIG. 3 is a schematic diagram of a hardware structure of the communications apparatus 30 according to an embodiment of this application. The communications apparatus 30 includes a processor 301, a communications line 302, a memory 303, and at least one communications interface (where description is provided in FIG. 3 merely by using an example in which the communications apparatus 30 includes a communications interface 304).

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications line 302 may include a path for transmitting information between the foregoing components.

The communications interface 304 is applicable to any apparatus such as a transceiver, and is configured to communicate with another device or a communications network such as the Ethernet, a radio access network (radio access network, RAN), or a wireless local area network (wireless local area networks, WLAN).

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and be connected to the processor through the communications line 302. Alternatively, the memory may be integrated with the processor.

The memory 303 is configured to store computer-executable instructions for executing the solutions of this application, and the processor 301 controls the execution. The processor 301 is configured to execute the computer-executable instructions stored in the memory 303, to implement the intent processing method provided in the following embodiments of this application.

Optionally, the compute-executable instructions in the embodiments of this application may also be referred to as application program code. This is not specifically limited in the embodiments of this application.

In a specific implementation, in an embodiment, the processor 301 may include one or more CPUs, for example, a CPU 0 and a CPU 1 in FIG. 3.

In a specific implementation, in an embodiment, the communications apparatus 30 may include a plurality of processors, for example, the processor 301 and a processor 308 in FIG. 3. Each of the processors may be a single-core (single-CPU) processor, or may be a multi-core (multi-CPU) processor. The processor herein may be one or more devices, circuits, and/or processing cores for processing data (for example, computer program instructions).

In a specific implementation, in an embodiment, the communications apparatus 30 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, a sensing device, or the like.

The communications apparatus 30 may be a general-purpose device or a special-purpose device. In a specific implementation, the communications apparatus 30 may be a desktop computer, a portable computer, a network server, a palmtop computer (palmtop computer), a mobile phone, a tablet computer, a wireless terminal device, an embedded device, or a device having a similar structure in FIG. 3. A type of the communications apparatus 30 is not limited in the embodiments of this application.

The following describes in detail the solutions provided in the embodiments of this application with reference to accompanying drawings.

It should be noted that, in the following embodiments of this application, names of messages or names of parameters in messages between devices are merely examples, and the messages or the parameters may have other names in specific implementations. This is not specifically limited in the embodiments of this application.

An embodiment of the present invention provides a monitoring method. As shown in FIG. 4, the method includes the following steps.

401: A transmitting node determines a first message, where a first field in the first message is set to be null, and the first field is used to indicate a time-frequency resource that carries hybrid automatic repeat request HARQ information.

It should be noted that in this embodiment of this application, the transmitting node may be a terminal or may be an access network device, and a receiving node may be a terminal. That the first field in the first message is set to be null means that the first field is reserved in the first message and the first field is an absent (absent) state. For example, no specific value is filled in the first field.

In a possible implementation, the transmitting node is an access network device, the receiving node is a terminal, the first message may be control signaling, and the transmitting node sends the first message to the receiving node through a Uu link.

In a possible implementation, the transmitting node is a terminal, the receiving node is a terminal, the first message may be sidelink control information (sidelink control information, SCI), and the transmitting node sends the first message to the receiving node through a PC5 interface.

In specific implementation, the transmitting node determines, based on one or more of the following several factors, whether to set the first field to be null: a congestion control status of a feedback resource, a quality of service (quality of service, QoS) requirement, a priority of a to-be-sent TB, or a feedback feature of the to-be-sent TB. It should be noted that when the transmitting node determines whether to set the first field to be null, factors that may be considered by the transmitting node include but are not limited to the foregoing several factors, and the transmitting node may alternatively determine, based on another determining factor, to set the first field to be null.

For example, a node 1 receives a TB 1 sent by a node 3, and needs to feed back corresponding HARQ information in a specific PSFCH feedback timeslot. Then, the node 1 sends a TB 2 to a node 2, and needs to feed back corresponding HARQ information in the same PSFCH feedback timeslot. Due to a limitation of half-duplex, the node 1 cannot simultaneously send and receive a PSFCH in a same PSFCH feedback timeslot. It is assumed that priorities (and/or QoS requirements) of the TB 1 and the TB 2 are different, and a priority (and/or a QoS requirement) of the TB 1 is/are higher than that of the TB 2. The node 1 sends the PSFCH to the node 3. The node 1 cannot receive the PSFCH of the node 2, and sets the first field in the first message to be null, to implicitly indicate the node 2 to give up feeding back HARQ information, or implicitly indicate the node 2 to delay feeding back the HARQ information. Alternatively, the node 1 adds a third field to the first message, to indicate the node 2 to delay or give up feeding back HARQ information.

For example, a node 1 receives a TB 1 sent by a node 3, and needs to feed back corresponding HARQ information in a specific PSFCH feedback timeslot based on a CBG. Then, the node 1 sends a TB 2 to a node 2, and needs to feed back corresponding HARQ information in the same PSFCH feedback timeslot based on a TB. Due to a limitation of half-duplex, the node 1 cannot simultaneously send and receive a PSFCH in a same PSFCH feedback timeslot. If a priority of feedback based on a CBG granularity is higher than a priority of feedback based on a TB granularity, the node 1 sends the PSFCH to the node 3. The node 1 cannot receive the PSFCH of the node 2, and the node 1 sets the first field in the first message to be null, to implicitly indicate the node 2 to give up feeding back HARQ information, or implicitly indicate the node 2 to delay feeding back the HARQ information. Alternatively, the node 1 adds a third field to the first message, to indicate the node 2 to delay or give up feeding back HARQ information.

For example, a node 1 receives a TB 1 of a node 3, and needs to feed back corresponding HARQ information in a specific PSFCH feedback timeslot based on a CBG. Then, the node 1 sends a TB 2 to a node 2, and needs to feed back corresponding HARQ information in the same PSFCH feedback timeslot based on a TB. Due to a limitation of half-duplex, the node 1 cannot simultaneously send and receive a PSFCH in a same PSFCH feedback timeslot. If a priority of feedback based on a CBG granularity is higher than a priority of feedback based on a TB granularity, the node 1 sends the PSFCH to the node 3. The node 1 cannot receive the PSFCH of the node 2, and the node 1 sets the first field in the first message to be null, to implicitly indicate the node 2 to give up feeding back HARQ information, or implicitly indicate the node 2 to delay feeding back the HARQ information. Alternatively, the node 1 adds a third field to the first message, to indicate the node 2 to delay or give up feeding back HARQ information.

For example, a node 1 receives a TB 1 of a node 3, and needs to feed back corresponding HARQ information in a specific PSFCH feedback timeslot based on a TB. Then, the node 1 sends a TB 2 to a node 2, and needs to feed back corresponding HARQ information in the same PSFCH feedback timeslot based on a TB. Due to a limitation of half-duplex, the node 1 cannot simultaneously send and receive a PSFCH in a same PSFCH feedback timeslot. It is assumed that an upper limit of a congestion control parameter CR (channel occupancy ratio) of the node 1 is higher. This means that the node 1 has a higher priority of sending a service. In this case, the node 1 sends the PSFCH to the node 3. The node 1 cannot receive the PSFCH of the node 2, and sets the first field in the first message to be null, to implicitly indicate the node 2 to give up feeding back HARQ information, or implicitly indicate the node 2 to delay feeding back the HARQ information. Alternatively, the node 1 adds a third field to the first message, to indicate the node 2 to delay or give up feeding back HARQ information.

It should be noted that a feedback feature of a TB includes that the TB is fed back based on a transport block granularity, or the TB is fed back based on a code block group (Code Block Group, CBG) granularity.

402: The transmitting node sends the first message to the receiving node, where the first message is used to indicate the receiving node to delay feeding back HARQ information corresponding to a first TB, or the first message is used to indicate the receiving node to give up feeding back the HARQ information corresponding to the first TB; and the first TB is a transport block scheduled by the first message.

In a possible implementation, once the first field in the first message is set to be null, it is considered by default that behavior performed by the receiving node after the receiving node receives the first message is giving up feeding back the HARQ information corresponding to the first TB. Alternatively, once the first field in the first message is set to be null, it is considered by default that behavior performed by the receiving node after the receiving node receives the first message is delaying feeding back the HARQ information corresponding to the first transport block TB.

It should be noted that, that the receiving node gives up feeding back the HARQ information corresponding to the first TB may be considered as: The receiving node does not generate the HARQ information corresponding to the first TB, or the receiving node disables an HARQ function.

That the receiving node delays feeding back the HARQ information corresponding to the first TB may be considered as: The receiving node sends, on a next available PSFCH resource, the HARQ information corresponding to the first TB.

It can be understood that the HARQ information corresponding to the first TB is used to indicate a result of receiving the first TB by the receiving node. For example, the receiving node fails to receive the first TB, or the receiving node successfully receives the first TB.

In a possible implementation, the HARQ information corresponding to the first TB has 1 bit: "0" or "1".

Optionally, the first message may further include a second field, and the second field is used to indicate the receiving node to delay feeding back HARQ information or give up feeding back the HARQ information.

For example, when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

In a possible implementation, the first field has 1 bit. When the 1 bit is "0", the first message is used to indicate a terminal to delay feeding back the HARQ information corresponding to the first TB; or when the 1 bit is "1", the first message is used to indicate the terminal to give up feeding back the HARQ information corresponding to the first TB.

Optionally, when the first message indicates the receiving node to delay feeding back the HARQ information, and the transmitting node sends more than one such first message, the receiving node may further send, on a next available PSFCH resource, a plurality of pieces of HARQ information whose feedback is delayed.

The first message includes a third field, the third field is used to indicate to delay feeding back N pieces of HARQ information, and the N pieces of HARQ information include the HARQ information corresponding to the first TB. For example, the third field may have N bits, and the first message indicates that the receiving node can delay feeding back a maximum of 2^{N} pieces of HARQ information.

Optionally, the method shown in FIG. 4 further includes the following: The transmitting node sends a second message to the receiving node. The second message includes a fourth field; the fourth field is used to indicate a feedback resource, and the feedback resource is used to carry the HARQ information corresponding to the first TB and HARQ information corresponding to a second TB; and the second TB is a transport block scheduled by the second message.

It should be noted that the fourth field and the first field may be a same field and each are used to indicate a PSFCH resource. When the first message indicates the receiving node to delay feeding back the first TB, the transmitting node may indicate, in a control message for scheduling a TB (that is, the second TB) next time, a PSFCH resource used to feed back the HARQ information corresponding to the first TB and the HARQ information corresponding to the second TB.

In a possible implementation, when the first field in the first message is set to be null, it is considered by default that the receiving node does not feed back the HARQ information corresponding to the first TB. In this case, the transmitting node retransmits the first TB, or the transmitting node blindly transmits the first TB. Blind transmission is repeated data transmission without HARQ feedback, and data transmission reliability is improved through repeated data transmission.

In the method provided in this embodiment of this application, when the first field in the first message is set to be null, both the transmitting node and the receiving node consider by default that feedback of the HARQ information corresponding to the TB scheduled by the first message is given up. Alternatively, when the first field in the first message is set to be null, both the transmitting node and the receiving node consider by default that feedback of the HARQ information corresponding to the TB scheduled by the first message is delayed. Behavior of the transmitting party and the receiving party is unified by using the first message, to avoid confusion between the behavior of the transmitting party and the receiving party. The transmitting node may retransmit the TB when considering by default that feedback of the HARQ information is given up. This ensures data transmission reliability. Alternatively, when considering by default that feedback of the HARQ information is delayed, the transmitting node may wait for the HARQ information subsequently sent by the receiving node, instead of retransmitting the TB. This prevents the receiving node from confusing retransmitted data and newly transmitted data, thereby improving data transmission reliability.

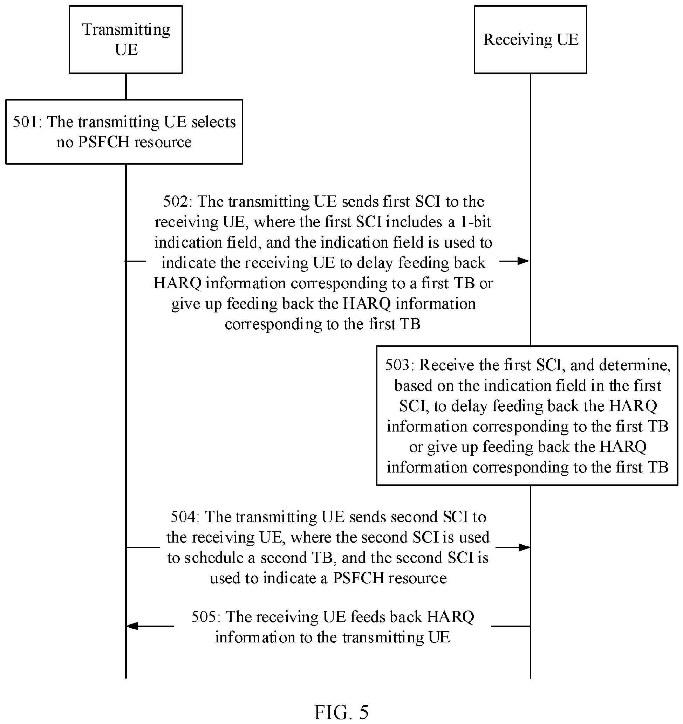

The method provided in the embodiments of this application is described below with reference to the accompanying drawings by using an example in which the transmitting node is UE and the receiving node is UE. As shown in FIG. 5, the method includes the following steps.

501: The transmitting UE selects no PSFCH resource.

In specific implementation, when the transmitting UE sends a first TB to the receiving UE, the transmitting UE may select a data resource and a PSFCH resource from an SL resource pool. Specifically, after selecting the data resource, the transmitting UE may send the first TB on the selected data resource.

If no PSFCH resource is selected in a PSSCH-to-PSFCH time interval (that is, the time interval K described in the embodiments of this application) and a first timeslot that is after the PSSCH-to-PSFCH time interval and in which a PSFCH resource exists, it is determined that no PSFCH resource is selected. After receiving the first TB, the receiving UE has no PSFCH resource to feed back HARQ information corresponding to the first TB.

502: The transmitting UE sends first SCI to the receiving UE, where the first SCI includes a 1-bit indication field, and the indication field is used to indicate the receiving UE to delay feeding back the HARQ information corresponding to the first TB or give up feeding back the HARQ information corresponding to the first TB.

It should be noted that the 1-bit indication field is a newly added field in SCI. In a possible implementation, when the indication field is "0", the first SCI is used to indicate the receiving UE to give up feeding back the HARQ information corresponding to the first TB; or when the indication field is "1", the first SCI is used to indicate the receiving UE to delay feeding back the HARQ information corresponding to the first TB.

503: The receiving UE receives the first SCI, and determines, based on the indication field in the first SCI, to delay feeding back the HARQ information corresponding to the first TB or give up feeding back the HARQ information corresponding to the first TB.

If the indication field indicates the receiving UE to give up feeding back the HARQ information corresponding to the first TB, the receiving UE does not generate the feedback HARQ information corresponding to the first TB.

Alternatively, if the indication field indicates the receiving UE to delay feeding back the HARQ information corresponding to the first TB, the receiving UE generates the HARQ information corresponding to the first TB; and sends, on a next available PSFCH resource, the HARQ information corresponding to the first TB.

504: The transmitting UE sends second SCI to the receiving UE, where the second SCI is used to schedule a second TB, and the second SCI is used to indicate a PSFCH resource.

It should be noted that if the first SCI indicates the receiving UE to delay feeding back the HARQ information corresponding to the first TB, when sending SCI to indicate a feedback resource next time, the transmitting UE needs to consider the HARQ information corresponding to the first TB. In other words, the PSFCH resource indicated by the second SCI is used to carry the HARQ information corresponding to the first TB and HARQ information corresponding to the second TB.

For example, the HARQ information corresponding to the first TB has 1 bit, the HARQ information corresponding to the second TB has 1 bit, and the PSFCH resource indicated by the second SCI may carry 2-bit information.

Alternatively, if the first SCI indicates the receiving UE to give up feeding back the HARQ information corresponding to the first TB, when sending SCI to indicate a feedback resource next time, the transmitting UE may not need to consider the HARQ information corresponding to the first TB. In other words, the PSFCH resource indicated by the second SCI is used to carry HARQ information corresponding to the second TB.

For example, the HARQ information corresponding to the second TB has 1 bit, and the PSFCH resource indicated by the second SCI may carry 1 -bit information.

505: The receiving UE feeds back HARQ information to the transmitting UE.

It is assumed that the first SCI indicates the receiving UE to delay feeding back the HARQ information corresponding to the first TB. The HARQ information fed back by the receiving UE in step 505 has 2 bits, and includes the HARQ information corresponding to the second TB and the HARQ information corresponding to the first TB.

Alternatively, it is assumed that the first SCI indicates the receiving UE to give up feeding back the HARQ information corresponding to the first TB. The HARQ information fed back by the receiving UE in step 505 has 1 bit, and includes the HARQ information corresponding to the second TB.

In a possible implementation, to ensure a delay requirement for data transmission, the transmitting UE may set a feedback time limit window, and the transmitting UE expects to receive, in the time limit window, HARQ information whose feedback is delayed. Once the time limit window is exceeded, the transmitting UE does not expect to receive the HARQ information whose feedback is delayed. When the time limit window is exceeded, the receiving UE may not generate the HARQ information and not send the HARQ information.

The feedback time limit window may be configured by a network side based on information such as delay reliability QoS of a service.

In a possible implementation, when sending a TB, the transmitting UE sets a timer (timer) for the TB. Before the timer of the TB ends timing, the transmitting UE expects to receive HARQ information whose feedback is delayed. If after the timer ends, a delay requirement for the TB cannot be met, the transmitting UE does not expect to receive the corresponding HARQ information.

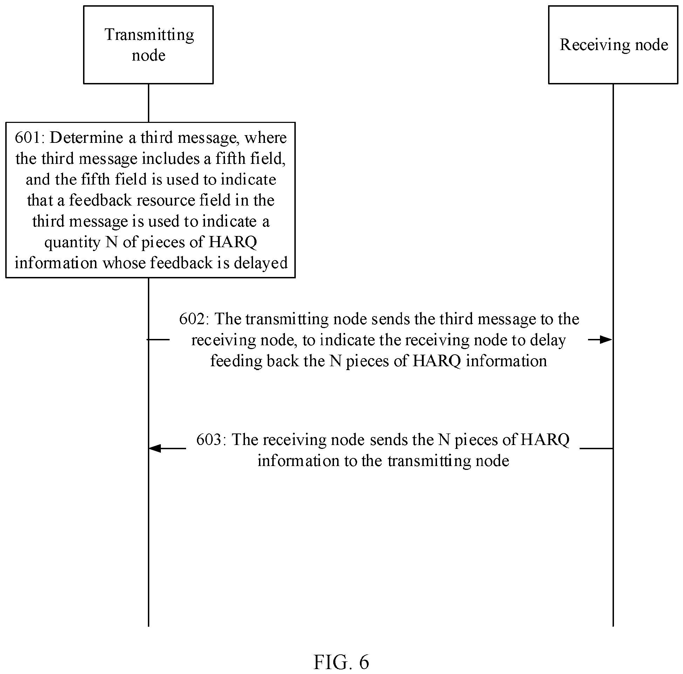

An embodiment of this application further provides a feedback indication method in which a field that is in control information and that indicates a feedback resource may be multiplexed to indicate a quantity of pieces of HARQ information whose feedback is delayed. In other words, a receiving node may feed back a plurality of pieces of HARQ information together. As shown in FIG. 6, the method includes the following steps.

601: A transmitting node determines a third message, where the third message includes a fifth field, and the fifth field is used to indicate that a feedback resource field in the third message is used to indicate a quantity N of pieces of HARQ information whose feedback is delayed.

It should be noted that the feedback resource field may be used to indicate a time-frequency resource that carries HARQ information, or the feedback resource field indicates information related to the time-frequency resource that carries the HARQ information. For example, the related information may be an index corresponding to the time-frequency resource, that is, the index corresponding to the time-frequency resource indicated by the feedback resource field. The time-frequency resource that carries the HARQ information may be determined from a configured time-frequency resource set based on the index, or a PSFCH feedback resource is obtained through mapping based on the index from a PSFCH feedback resource corresponding to a plurality of transport blocks.

For example, the fifth field is the first field in the first message in the embodiments of this application, or the fourth field in the second message in the embodiments of this application.

When the third message indicates the receiving node to delay feeding back the HARQ information, the feedback resource field no long indicates the time-frequency resource that carries the HARQ information, and may be used to indicate the quantity N of pieces of HARQ information whose feedback needs to be delayed. In addition, the fifth field needs to be added to indicate an actual function of the feedback resource field.

For example, the fifth field has 1 bit. When the fifth field is "0", the feedback resource field is used to indicate the time-frequency resource that carries the HARQ information; or when the fifth field is "1", the feedback resource field is used for the quantity N of pieces of HARQ information whose feedback needs to be delayed.

In a possible implementation, the feedback resource field may have N bits, and the first message indicates that the receiving node can delay feeding back a maximum of 2^{N} pieces of HARQ information.

602: The transmitting node sends the third message to the receiving node, to indicate the receiving node to delay feeding back the N pieces of HARQ information.

603: The receiving node sends the N pieces of HARQ information to the transmitting node.

Specifically, the receiving node may send the N pieces of HARQ information to the transmitting node by using an available PSFCH resource.

Optionally, it is assumed that transport blocks whose feedback needs to be delayed are: a TB 1, a TB 2, and a TB 3, and HARQ information corresponding to the TB 1, the TB 2, and the TB 3 is: an ACK, a NACK, and an ACK. The HARQ information sent by the receiving node in step 603 is the ACK, the NACK, and the ACK.

In addition, the HARQ information corresponding to the TB 1, the TB 2, and the TB 3 may be further placed, for sending, in a same HARQ-ACK codebook with HARQ information that is currently normally fed back. The HARQ information that is currently normally fed back may be placed in a header or a tail of the HARQ-ACK codebook, and a total quantity of bits of HARQ information in the HARQ-ACK codebook is four.

In a possible implementation, the receiving node may further correct, based on a count field, an error caused by a loss of HARQ information. The count field may be the feedback resource field. In this scenario, the feedback resource field no longer indicates the time-frequency resource that carries the HARQ information, but is used to indicate a quantity of pieces of HARQ information whose feedback is delayed.

The count field may alternatively be a newly added field, for example, the third field in this embodiment of this application.

For example, the transmitting node sends SCI 1 to the receiving node to indicate the receiving node to delay feeding back the TB 1. A count field in the SCI 1 is denoted as a counter-DFI 1. The counter-DFI 1 may be "00", indicating that feedback of one piece of HARQ information needs to be delayed, that is, the HARQ information corresponding to the TB 1. Then, the transmitting node sends SCI 2 to the receiving node to indicate the receiving node to delay feeding back the TB 2. A count field in the SCI 2 is denoted as a counter-DFI 2. The counter-DFI 2 may be "01", indicating that feedback of two pieces of HARQ information needs to be delayed, that is, the HARQ information corresponding to the TB 1 and the HARQ information corresponding to the TB 2. When a counter-DFI in SCI received by the receiving node is "11", indicating to delay feeding back a TB 4, but the receiving node does not receive SCI whose counter-DFI is "10", the receiving party may know, by using the counter-DFI field, that the receiving party loses a data block (for example, the TB 3) between the TB 2 and the TB 4, and fills the NACK at a corresponding location when feeding back the HARQ information.

In a possible implementation, a counter-DFI in SCI received by the receiving node is "11", that is, the counter-DFI indicates that the node needs to delay feeding back four pieces of HARQ information: the HARQ information corresponding to the TB 1, the HARQ information corresponding to the TB 2, the HARQ information corresponding to the TB 3 (a lost data block), and HARQ information corresponding to a TB 4. It is assumed that the receiving node successfully receives the TB 2 and the TB 4, and needs to retransmit the TB 1. To be specific, the HARQ information corresponding to the TB 1 is "0", the HARQ information corresponding to the TB 2 is "1", and the HARQ information corresponding to the TB 4 is "1". In addition, because the TB 3 is the lost data block, it is considered by default that the HARQ information corresponding to the TB 3 is "0". HARQ information whose feedback is delayed by the receiving node is "0101". The four bits sequentially correspond to the four data blocks: the TB 1 to the TB 4.

In a possible implementation, an accumulation sequence in a counter-DFI field complies with a rule of first frequency domain and then time domain. For example, a sub-channel with a minimum sub-channel sequence number is first determined, or a sub-channel with a lowest frequency domain may be first determined, for example, a sub-channel 1. A first SCI detection location (a location at which the SCI is first detected in a timeslot) on the sub-channel 1 is fixed, and HARQ information corresponding to the first SCI detection location is first accumulated in the counter-DFI field. For example, a counter-DFI field 00 represents that feedback of the HARQ information is delayed. In addition, all sub-channels are traversed. HARQ information corresponding to SCI detection locations that are on the remaining sub-channels and that have a start location the same as that of the SCI detection location at which the SCI is first detected is accumulated in the counter-DFI field in ascending order of sequence numbers of the sub-channels (or in ascending order of frequency domains of the sub-channels). For example, HARQ information corresponding to a sub-channel 2 is the second one that is accumulated in the counter-DFI field. For example, a counter-DFI field 01 represents that feedback of the HARQ information is delayed. HARQ information corresponding to a sub-channel 3 is the third one that is accumulated in the counter-DFI field. For example, a counter-DFI field 10 represents feedback of the HARQ information is delayed. Then, second SCI whose start location is the earliest is determined from the remaining SCI, and the foregoing step is repeated. The rest may be deduced by analogy.

It should be noted that the counter-DFI field, that is, a counter-Delay feedback indicator field, may be the third field in this embodiment of this application.

In a possible implementation, if the transmitting node selects no PSFCH resource when sending a TB, the transmitting node retransmits the TB. Data transmission reliability is ensured by repeatedly sending data. Specifically, a quantity of times of retransmitting the TB may be determined based on a QoS parameter of the TB and/or congestion control information of a resource.

In addition, the quantity of times of retransmitting the TB may alternatively be dynamically indicated in the SCI.

In a possible implementation, if the transmitting node selects no PSFCH resource when sending a TB, the transmitting node indicates the receiving node to delay feeding back HARQ information corresponding to the TB. The receiving node feeds back, on a next available PSFCH resource, the HARQ information corresponding to the TB.

Alternatively, the transmitting node may indicate, in the SCI to the receiving node, a resource for feeding back HARQ information (HARQ information whose feedback needs to be delayed).

In a possible implementation, the first field in the first message is set to be null, to indicate the receiving node to delay feeding back HARQ information. HARQ information whose feedback is delayed by the receiving node may be carried on a PSCCH, a PSSCH, or a PSFCH.

In a possible implementation, the first field in the first message is set to be null, to indicate the receiving node to delay feeding back HARQ information. The transmitting node may add a field to indicate whether the HARQ information whose feedback is delayed by the receiving node can be carried on the PSCCH or the PSSCH channel. It is assumed that the field indicates that the HARQ information whose feedback is delayed by the receiving node can be carried on the PSCCH or the PSSCH channel. The transmitting node expects to receive, on a received PSCCH or PSSCH before receiving a next corresponding PSFCH, the corresponding HARQ information whose feedback is delayed.

For example, the receiving node and the transmitting node consider by default that the PSCCH, the PSSCH, or the PSFCH carry the HARQ information whose feedback is delayed, but the transmitting node may be unable to determine a specific channel on which the HARQ information is included.

Alternatively, before feeding back HARQ information next time, the receiving node sends data or a CSI measurement report to the transmitting node, and the receiving node may carry, on the PSSCH, the HARQ information whose feedback is delayed. In a possible implementation, an HARQ process number may be carried to identify different HARQ information.

Alternatively, the transmitting node may indicate, to the receiving node by using 1 or 2 bits in the SCI, a specific channel for carrying the HARQ information whose feedback is delayed. For example, "00" is used to indicate the receiving node to carry, on the PSCCH, the HARQ information whose feedback is delayed; "01" is used to indicate the receiving node to carry, on the PSSCH, the HARQ information whose feedback is delayed; and " 10" is used to indicate the receiving node to carry, on the PSFCH, the HARQ information whose feedback is delayed.

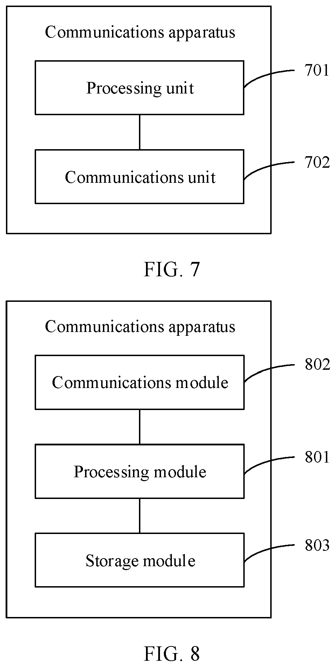

When function modules are obtained through division based on each corresponding function, FIG. 7 is a possible schematic diagram of a structure of the communications apparatus in the foregoing embodiments. The communications apparatus shown in FIG. 7 may be the transmitting node (or the receiving node) in the embodiments of this application, or may be a component that is in the transmitting node (or the receiving node) and that implements the foregoing method, or may be a chip applied to the transmitting node (or the receiving node). The chip may be a system-on-a-chip (System-On-a-Chip, SOC), a baseband chip having a communications function, or the like. As shown in FIG. 7, the communications apparatus includes a processing unit 701 and a communications unit 702. The processing unit may be one or more processors, and the communications unit may be a transceiver.

The processing unit 701 is configured to support the transmitting node in performing step 401, step 501, step 601, and/or another process of the technology described in this specification.

The communications unit 702 is configured to support communication between the communications apparatus and another communications apparatus, for example, support the transmitting node (or the receiving node) in performing step 402, step 502, step 504, step 505, step 602, step 603, and/or another process of the technology described in this specification.

It should be noted that all related content of the steps in the foregoing method embodiments may be cited in function description of corresponding function modules. Details are not described herein again.

For example, when an integrated unit is used, FIG. 8 is a schematic diagram of a structure of a communications apparatus according to an embodiment of this application. In FIG. 8, the communications apparatus includes a processing module 801 and a communications module 802. The processing module 801 is configured to control and manage actions of the communications apparatus, for example, perform the step performed by the processing unit 701, and/or another process of the technology described in this specification. The communications module 802 is configured to: perform the step performed by the communications unit 702, and support interaction between the communications apparatus and another device, for example, interaction with another terminal apparatus. As shown in FIG. 8, the communications apparatus may further include a storage module 803, and the storage module 803 is configured to store program code and data of the communications apparatus.

When the processing module 801 is a processor, the communications module 802 is a transceiver, and the storage module 803 is a memory, the communications apparatus is the communications apparatus shown in FIG. 3.

An embodiment of this application provides a computer-readable storage medium. The computer-readable storage medium stores instructions. The instructions are used to perform the methods shown in FIG. 4 to FIG. 6.

An embodiment of this application provides a computer program product including instructions. When the computer program product runs on a communications apparatus, the communications apparatus is enabled to perform the methods shown in FIG. 4 to FIG. 6.

An embodiment of this application provides a wireless communications apparatus. The wireless communications apparatus stores instructions. When the wireless communications apparatus runs on the communications apparatuses shown in FIG. 3, FIG. 7, and FIG. 8, the communications apparatuses are enabled to perform the communications methods shown in FIG. 4 to FIG. 6. The wireless communications apparatus may be a chip.

An embodiment of this application further provides a communications system. The communications system includes a terminal and an access network device. For example, the terminal may be the communications apparatus shown in FIG. 3, FIG. 7, or FIG. 8, and the access network device may be the communications apparatus shown in FIG. 3, FIG. 7, or FIG. 8.

A transmitting node determines a first message, where a first field in the first message is set to be null, and the first field is used to indicate a time-frequency resource that carries hybrid automatic repeat request HARQ information. The transmitting node sends the first message to a receiving node, where the first message is used to indicate the receiving node to delay feeding back HARQ information corresponding to a first transport block TB, or the first message is used to indicate the receiving node to give up feeding back the HARQ information corresponding to the first TB; and the first TB is a transport block scheduled by the first message.

The receiving node receives the first message from the transmitting node, and gives up feeding back the HARQ information corresponding to the first TB, or delays feeding back the HARQ information corresponding to the first TB.

According to the foregoing description of the implementations, a person skilled in the art may clearly understand that, for the purpose of convenient and brief description, only division into the foregoing function modules is used as an example for description. In actual application, the foregoing functions may be allocated to different function modules and implemented based on a requirement. To be specific, an inner structure of a database access apparatus is divided into different function modules to implement all or some of the functions described above.

The processor in this embodiment of this application may include but is not limited to at least one of the following computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions. The processor may be an independent semiconductor chip, or may be integrated with another circuit to form a semiconductor chip. For example, the processor and another circuit (for example, an encoding/decoding circuit, a hardware acceleration circuit, or various buses and interface circuits) may form a SoC (system-on-a-chip). Alternatively, the processor may be integrated into an ASIC as a built-in processor of the ASIC, and the ASIC integrated with the processor may be independently packaged or may be packaged with another circuit. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

The memory in the embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

In this application, "at least one" refers to one or more. "A plurality of" refers to two or more than two. The term "and/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects. At least one of the following or a similar expression thereof indicates any combination of the following, and includes any combination of one or more of the following. For example, at least one of a, b, or c may indicate: a, b, c, a and b, a and c, b and c, or a, b, and c, where a, b, and c may be singular or plural. In addition, for convenience of clear description in the embodiments of this application, terms such as "first", "second", and the like are used to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference.

According to the foregoing description of the implementations, a person skilled in the art may clearly understand that, for the purpose of convenient and brief description, only division into the foregoing function modules is used as an example for description. In actual application, the foregoing functions may be allocated to different function modules and implemented based on a requirement. To be specific, an inner structure of a database access apparatus is divided into different function modules to implement all or some of the functions described above.

In the several embodiments provided in this application, it should be understood that the disclosed database access apparatus and method may be implemented in other manners. For example, the described database access apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communications connections may be implemented through some interfaces. The indirect couplings or communications connections between the database access apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor to perform all or some of the steps of the methods described in the embodiments of this application. The foregoing storage medium includes: any medium that can store program code, such as a flash memory, a removable hard disk, a read-only memory, a random access memory, a magnetic disk, or a compact disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A feedback information indication method, comprising:
determining (401), by a transmitting node, a first message, wherein a first field in the first message is used to indicate a time-frequency resource that carries hybrid automatic repeat request, HARQ, information;
setting, by the transmitting node, the first field in the first message to be null, when no time-frequency resource for feeding back HARQ information is provided to a receiving node; and
sending (402), by the transmitting node, the first message to the receiving node, wherein the first message is used to indicate to the receiving node by the first field set to null to delay feeding back HARQ information corresponding to a first transport block, TB, or the first message is used to indicate to the receiving node to give up feeding back the HARQ information corresponding to the first TB; and the first TB is a transport block scheduled by the first message,
wherein the first message comprises a third field, the third field is used to indicate to delay feeding back N pieces of HARQ information, the N pieces of HARQ information comprise the HARQ information corresponding to the first TB, and N is an integer greater than or equal to two.

2. The method according to claim 1, wherein that the first message is used to indicate the receiving node to delay feeding back HARQ information corresponding to a first TB, or the first message is used to indicate the receiving node to give up feeding back the HARQ information corresponding to the first TB comprises:
comprising, by the first message, a second field, wherein when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

3. The method according to any one of claims 1 or 2, wherein the method further comprises:
sending, by the transmitting node, a second message to the receiving node, wherein the second message comprises a fourth field; the fourth field is used to indicate a feedback resource, and the feedback resource is used to carry the HARQ information corresponding to the first TB and HARQ information corresponding to a second TB; and the second TB is a transport block scheduled by the second message.

4. The method according to any one of claims 1 to 3, wherein the method further comprises:
determining, by the transmitting node based on one or more of a congestion control status of a feedback resource, a QoS requirement, a priority of the first TB, or a feedback feature of the first TB, to set the first field to be null, wherein the feedback feature of the first TB comprises that the first TB is fed back based on a comparison of a TB granularity with a code block group, CBG, granularity.

5. A communications apparatus, comprising:
a processing unit (701), configured to determine a first message, wherein a first field in the first message is used to indicate a time-frequency resource that carries hybrid automatic repeat request, HARQ, information and to set the first field in the first message to be null, when no time-frequency resource for feeding back HARQ information is provided to a receiving node; and
a communications unit (702), configured to send the first message to the receiving node, wherein the first message is used to indicate to the receiving node by the first field set to null to delay feeding back HARQ information corresponding to a first transport block, TB, or the first message is used to indicate the receiving node to give up feeding back the HARQ information corresponding to the first TB; and the first TB is a transport block scheduled by the first message,
wherein the first message comprises a third field, the third field is used to indicate to delay feeding back N pieces of HARQ information, the N pieces of HARQ information comprise the HARQ information corresponding to the first TB, and N is an integer greater than or equal to two.

6. The communications apparatus according to claim 5, wherein that the first message is used to indicate the receiving node to delay feeding back HARQ information corresponding to a first TB, or the first message is used to indicate the receiving node to give up feeding back the HARQ information corresponding to the first TB comprises:
the first message comprises a second field, wherein when the second field is a first value, the second field is used to indicate the receiving node to delay feeding back the HARQ information corresponding to the first TB; or when the second field is a second value, the second field is used to indicate the receiving node to give up feeding back the HARQ information corresponding to the first TB.

7. The communications apparatus according to any one of claims 5 or 6, wherein the communications unit (702) is further configured to send a second message to the receiving node, wherein the second message comprises a fourth field; the fourth field is used to indicate a feedback resource, and the feedback resource is used to carry the HARQ information corresponding to the first TB and HARQ information corresponding to a second TB; and the second TB is a transport block scheduled by the second message.

8. The apparatus according to any one of claims 5 to 7, wherein the processing unit (701) is specifically configured to:
determine, based on one or more of a congestion control status of a feedback resource, a QoS requirement, a priority of the first TB, or a feedback feature of the first TB, to set the first field to be null, wherein the feedback feature of the first TB comprises that the first TB is fed back based on a comparison of a transport block granularity with a code block group, CBG, granularity.

9. A computer program product comprising instructions which, when executed by the communication apparatus of claim 5, cause the communications apparatus of claim 5 to execute the steps of the method of claims 1 to 4.

10. A computer-readable storage medium having stored thereon the computer program of claim 9.

## Patentansprüche

1. Verfahren zur Rückkopplungsanweisung, umfassend:
Bestimmen (401) einer ersten Nachricht durch einen übertragenden Knoten, wobei ein erstes Feld in der ersten Nachricht verwendet wird, um eine Zeit-Frequenz-Ressource anzugeben, die hybride automatische Wiederholungsanforderungs (Hybrid-Automatic-Repeat-Request - HARQ)-Informationen überträgt;
Auf Null Setzen des ersten Felds in der ersten Nachricht durch den übertragenden Knoten, wenn einem empfangenden Knoten keine Zeit-Frequenz-Ressource zum Rückkoppeln von HARQ-Informationen bereitgestellt wird; und
Senden (402) der ersten Nachricht durch den übertragenden Knoten an den empfangenden Knoten, wobei die erste Nachricht verwendet wird, damit das erste auf Null gesetzte Feld dem empfangenden Knoten angibt, das Rückkoppeln von HARQ-Informationen, die einem ersten Transportblock (TB) entsprechen, zu verzögern, oder die erste Nachricht verwendet wird, um dem empfangenden Knoten anzugeben, dass er das Rückkoppeln der HARQ-Informationen, die dem ersten TB entsprechen, aufgeben soll; und der erste TB ein Transportblock ist, der von der ersten Nachricht geplant wird,
wobei die erste Nachricht ein drittes Feld umfasst, das dritte Feld verwendet wird, um anzugeben, dass das Rückkoppeln von N Teilen von HARQ-Informationen verzögert werden soll, die N Teile von HARQ-Informationen die HARQ-Informationen umfassen, die dem ersten TB entsprechen, und N eine ganze Zahl größer als oder gleich zwei ist.

2. Verfahren nach Anspruch 1, wobei die erste Nachricht verwendet wird, um dem empfangenden Knoten anzuzeigen, dass er das Rückkoppeln von HARQ-Informationen, die einem ersten TB entsprechen, verzögern soll, oder die erste Nachricht verwendet wird, um dem empfangenden Knoten anzuzeigen, dass er das Rückkoppeln der HARQ-Informationen, die dem ersten TB entsprechen, aufgeben soll, umfassend:
Umfassen eines zweiten Felds durch die erste Nachricht, wobei, wenn das zweite Feld ein erster Wert ist, das zweite Feld verwendet wird, um dem empfangenden Knoten anzugeben, dass er das Rückkoppeln der HARQ-Informationen, die dem ersten TB entsprechen, verzögern soll; oder wenn das zweite Feld ein zweiter Wert ist, das zweite Feld verwendet wird, um dem empfangenden Knoten anzugeben, dass er das Rückkoppeln der HARQ-Informationen, die dem ersten TB entsprechen, aufgeben soll.

3. Verfahren nach einem der Ansprüche 1 oder 2, wobei das Verfahren ferner Folgendes umfasst:
Senden einer zweiten Nachricht durch den übertragenden Knoten an den empfangenden Knoten, wobei die zweite Nachricht ein viertes Feld umfasst; das vierte Feld verwendet wird, um eine Rückkopplungs-Ressource anzugeben, und die Rückkopplungs-Ressource verwendet wird, um die HARQ-Informationen, die dem ersten TB entsprechen, und HARQ-Informationen, die einem zweiten TB entsprechen, zu übertragen; und der zweite TB ein Transportblock ist, der durch die zweite Nachricht geplant wird.

4. Verfahren nach einem der Ansprüche 1 bis 3, wobei das Verfahren ferner Folgendes umfasst:
Bestimmen einer Rückkopplungs-Ressource, einer QoS-Anforderung, einer Priorität des ersten TB oder eines Rückkopplungs-Merkmals des ersten TB durch den übertragenden Knoten auf Grundlage eines oder mehrerer Überlastungskontrollstatus, um das erste Feld auf Null zu setzen, wobei das Rückkopplungs-Merkmal des ersten TB umfasst, dass der erste TB auf Grundlage eines Vergleichs einer TB-Granularität mit einer Codeblockgruppen (CBG)-Granularität rückgekoppelt wird.

5. Kommunikationsgerät, das Folgendes umfasst:
eine Verarbeitungseinheit (701), die dazu konfiguriert ist, eine erste Nachricht zu bestimmen, wobei ein erstes Feld in der ersten Nachricht verwendet wird, um eine Zeit-Frequenz-Ressource anzugeben, die hybride automatische Wiederholungsanforderungs (HARQ)-Informationen überträgt, und um das erste Feld in der ersten Nachricht auf Null zu setzen, wenn einem empfangenden Knoten keine Zeit-Frequenz-Ressource zum Rückkoppeln von HARQ-Informationen bereitgestellt wird; und
eine Kommunikationseinheit (702), die zum Senden der ersten Nachricht an den empfangenden Knoten konfiguriert ist, wobei die erste Nachricht verwendet wird, damit das erste auf Null gesetzte Feld dem empfangenden Knoten angibt, das Rückkoppeln von HARQ-Informationen, die einem ersten Transportblock (TB) entsprechen, zu verzögern, oder die erste Nachricht verwendet wird, um dem empfangenden Knoten anzugeben, dass er das Rückkoppeln der HARQ-Informationen, die dem ersten TB entsprechen, aufgeben soll; und der erste TB ein Transportblock ist, der von der ersten Nachricht geplant wird,
wobei die erste Nachricht ein drittes Feld umfasst, das dritte Feld verwendet wird, um anzugeben, dass das Rückkoppeln von N Teilen von HARQ-Informationen verzögert werden soll, die N Teile von HARQ-Informationen die HARQ-Informationen umfassen, die dem ersten TB entsprechen, und N eine ganze Zahl größer als oder gleich zwei ist.

6. Kommunikationsgerät nach Anspruch 5, wobei die erste Nachricht verwendet wird, um dem empfangenden Knoten anzuzeigen, dass er das Rückkoppeln von HARQ-Informationen, die einem ersten TB entsprechen, verzögern soll, oder die erste Nachricht verwendet wird, um dem empfangenden Knoten anzuzeigen, dass er das Rückkoppeln der HARQ-Informationen, die dem ersten TB entsprechen, aufgeben soll, umfassend:
die erste Nachricht umfasst ein zweites Feld, wobei, wenn das zweite Feld ein erster Wert ist, das zweite Feld verwendet wird, um dem empfangenden Knoten anzugeben, dass er das Rückkoppeln der HARQ-Informationen, die dem ersten TB entsprechen, verzögern soll; oder wenn das zweite Feld ein zweiter Wert ist, das zweite Feld verwendet wird, um dem empfangenden Knoten anzugeben, dass er das Rückkoppeln der HARQ-Informationen, die dem ersten TB entsprechen, aufgeben soll.

7. Kommunikationsgerät nach einem der Ansprüche 5 oder 6, wobei die Kommunikationseinheit (702) ferner dazu konfiguriert ist, eine zweite Nachricht an den empfangenden Knoten zu senden, wobei die zweite Nachricht ein viertes Feld umfasst; das vierte Feld verwendet wird, um eine Rückkopplungs-Ressource anzugeben, und die Rückkopplungs-Ressource verwendet wird, um die HARQ-Informationen, die dem ersten TB entsprechen, und HARQ-Informationen, die einem zweiten TB entsprechen, zu übertragen; und der zweite TB ein Transportblock ist, der durch die zweite Nachricht geplant wird.

8. Gerät nach einem der Ansprüche 5 bis 7, wobei die Verarbeitungseinheit (701) insbesondere zu Folgendem konfiguriert ist:
Bestimmen einer Rückkopplungs-Ressource, einer QoS-Anforderung, einer Priorität des ersten TB oder eines Rückkopplungs-Merkmals des ersten TB auf Grundlage eines oder mehrerer Überlastungskontrollstatus, um das erste Feld auf Null zu setzen, wobei das Rückkopplungs-Merkmal des ersten TB umfasst, dass der erste TB auf Grundlage eines Vergleichs einer Transportblock-Granularität mit einer Codeblockgruppen (CBG)-Granularität rückgekoppelt wird.

9. Computerprogrammprodukt, das Anweisungen umfasst, die, wenn sie von dem Kommunikationsgerät nach Anspruch 5 ausgeführt werden, das Kommunikationsgerät nach Anspruch 5 dazu veranlassen, die Schritte des Verfahrens nach den Ansprüchen 1 bis 4 auszuführen.

10. Computerlesbares Speichermedium, auf dem das Computerprogramm nach Anspruch 9 gespeichert ist.

## Revendications

1. Procédé d'indication d'informations de rétroaction, comprenant :
la détermination (401), par un noeud de transmission, d'un premier message, dans lequel un premier champ dans le premier message est utilisé pour indiquer une ressource temps-fréquence qui transporte des informations de demande de répétition automatique hybride, HARQ ;
la définition, par le noeud de transmission, du premier champ dans le premier message comme étant nul, lorsqu'aucune ressource temps-fréquence pour la rétroaction d'informations HARQ n'est fournie à un noeud de réception ; et
l'envoi (402), par le noeud de transmission, du premier message au noeud de réception, dans lequel le premier message est utilisé pour indiquer au noeud de réception par le premier champ défini comme nul de retarder la rétroaction des informations HARQ correspondant à un premier bloc de transport, TB, ou le premier message est utilisé pour indiquer au noeud de réception de renoncer à la rétroaction des informations HARQ correspondant au premier TB ; et le premier TB est un bloc de transport planifié par le premier message,
dans lequel le premier message comprend un troisième champ, le troisième champ est utilisé pour indiquer de retarder la rétroaction de N éléments d'informations HARQ, les N éléments d'informations HARQ comprennent les informations HARQ correspondant au premier TB, et N est un nombre entier supérieur ou égal à deux.

2. Procédé selon la revendication 1, dans lequel le fait que le premier message est utilisé pour indiquer au noeud de réception de retarder la rétroaction des informations HARQ correspondant à un premier TB, ou que le premier message est utilisé pour indiquer au noeud de réception de renoncer à la rétroaction des informations HARQ correspondant au premier TB, comprend :
le fait que le premier message comprend un deuxième champ, dans lequel lorsque le deuxième champ est une première valeur, le deuxième champ est utilisé pour indiquer au noeud de réception de retarder la rétroaction des informations HARQ correspondant au premier TB ; ou lorsque le deuxième champ est une seconde valeur, le deuxième champ est utilisé pour indiquer au noeud de réception de renoncer à la rétroaction des informations HARQ correspondant au premier TB.

3. Procédé selon l'une quelconque des revendications 1 ou 2, dans lequel le procédé comprend en outre :
l'envoi, par le noeud de transmission, d'un second message au noeud de réception, dans lequel le second message comprend un quatrième champ ; le quatrième champ est utilisé pour indiquer une ressource de rétroaction, et la ressource de rétroaction est utilisée pour transporter les informations HARQ correspondant au premier TB et les informations HARQ correspondant à un second TB ; et le second TB est un bloc de transport planifié par le second message.

4. Procédé selon l'une quelconque des revendications 1 à 3, dans lequel le procédé comprend en outre :
la détermination, par le noeud de transmission, sur la base d'un ou plusieurs parmi un état de commande de congestion d'une ressource de rétroaction, une exigence de QoS, une priorité du premier TB ou une fonction de rétroaction du premier TB, du fait de définir le premier champ comme étant nul, dans lequel la fonction de rétroaction du premier TB comprend le fait que le premier TB est renvoyé sur la base d'une comparaison d'une granularité de TB avec une granularité de groupe de blocs de code, CBG.

5. Appareil de communication, comprenant :
une unité de traitement (701), configurée pour déterminer un premier message, dans lequel un premier champ dans le premier message est utilisé pour indiquer une ressource temps-fréquence qui transporte des informations de demande de répétition automatique hybride, HARQ, et pour définir le premier champ dans le premier message comme étant nul lorsqu'aucune ressource temps-fréquence pour la rétroaction d'informations HARQ n'est fournie à un noeud de réception ; et
une unité de communication (702), configurée pour envoyer le premier message au noeud de réception, dans lequel le premier message est utilisé pour indiquer au noeud de réception par le premier champ défini comme nul de retarder la rétroaction des informations HARQ correspondant à un premier bloc de transport, TB, ou le premier message est utilisé pour indiquer au noeud de réception de renoncer à la rétroaction des informations HARQ correspondant au premier TB ; et le premier TB est un bloc de transport planifié par le premier message,
dans lequel le premier message comprend un troisième champ, le troisième champ est utilisé pour indiquer de retarder la rétroaction de N éléments d'informations HARQ, les N éléments d'informations HARQ comprennent les informations HARQ correspondant au premier TB, et N est un nombre entier supérieur ou égal à deux.

6. Appareil de communication selon la revendication 5, dans lequel le fait que le premier message est utilisé pour indiquer au noeud de réception de retarder la rétroaction des informations HARQ correspondant à un premier TB, ou que le premier message est utilisé pour indiquer au noeud de réception de renoncer à la rétroaction des informations HARQ correspondant au premier TB, comprend :
le premier message comprend un deuxième champ, dans lequel lorsque le deuxième champ est une première valeur, le deuxième champ est utilisé pour indiquer au noeud de réception de retarder la rétroaction des informations HARQ correspondant au premier TB ; ou lorsque le deuxième champ est une seconde valeur, le deuxième champ est utilisé pour indiquer au noeud de réception de renoncer à la rétroaction des informations HARQ correspondant au premier TB.

7. Appareil de communication selon l'une quelconque des revendications 5 ou 6, dans lequel l'unité de communication (702) est en outre configurée pour envoyer un second message au noeud de réception, dans lequel le second message comprend un quatrième champ ; le quatrième champ est utilisé pour indiquer une ressource de rétroaction, et la ressource de rétroaction est utilisée pour transporter les informations HARQ correspondant au premier TB et les informations HARQ correspondant à un second TB ; et le second TB est un bloc de transport planifié par le second message.

8. Appareil selon l'une quelconque des revendications 5 à 7, dans lequel l'unité de traitement (701) est spécifiquement configurée pour :
déterminer, sur la base d'un ou plusieurs parmi un état de commande de congestion d'une ressource de rétroaction, une exigence de QoS, une priorité du premier TB ou une fonction de rétroaction du premier TB, le fait de définir le premier champ comme étant nul, dans lequel la fonction de rétroaction du premier TB comprend le fait que le premier TB est renvoyé sur la base d'une comparaison d'une granularité de bloc de transport avec une granularité de groupe de blocs de code, CBG.

9. Produit programme informatique comprenant des instructions qui, lorsqu'elles sont exécutées par l'appareil de communication selon la revendication 5, amènent l'appareil de communication selon la revendication 5 à exécuter les étapes du procédé selon les revendications 1 à 4.

10. Support de stockage lisible par ordinateur sur lequel est stocké le programme informatique selon la revendication 9.
